Europäisches Patentamt

European Patent Office

Office européen des brevets

(11) Publication number: **0 272 002 B1**

## EUROPEAN PATENT SPECIFICATION

(45) Date of publication of patent specification: **03.05.95**   (51) Int. Cl.6: **A01N 63/00**, A01N 63/02

(21) Application number: **87310146.3**

(22) Date of filing: **18.11.87**

(54) Enzymes as agricultural chemical adjuvants.

(30) Priority: **19.11.86 US 932958**
**19.10.87 US 112108**

(43) Date of publication of application:
**22.06.88 Bulletin  88/25**

(45) Publication of the grant of the patent:
**03.05.95 Bulletin  95/18**

(84) Designated Contracting States:
**DE FR GB**

(56) References cited:
**EP-A- 0 129 315**
**EP-A- 0 184 288**
**EP-A- 0 197 622**

**CENTRAL PATENTS INDEX, BASIC AB-STRACTS JOURNAL, Section C, week E25, 18thAugust 1982, no. C038, 82-50855E/25, Derwent Publications Ltd, London, GB;&& JP-A-57 75 906 (HORIUCHI) 12-**

**05-1982**

(73) Proprietor: **GENENCOR INTERNATIONAL, INC.**
**4 Cambridge Place,**
**1870 South Winton Road**
**Rochester,**
**New York 14618 (US)**

(72) Inventor: **Poulose, Ayrookaram J.**
**2540 Carmel Drive**
**San Bruno**
**California 94066 (US)**
Inventor: **Kolattukudy, Pappachan**
**2301 Hoxton Court**
**Columbus**
**Ohio (US)**

(74) Representative: **Armitage, Ian Michael et al**
**MEWBURN ELLIS**
**York House**
**23 Kingsway**
**London WC2B 6HP (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

The invention relates to the use of enzymes as agricultural chemical adjuvants. Specifically, the invention relates to a method of increasing the effect of agricultural chemicals with the use of depolymerase enzymes and to compositions of depolymerase enzymes and agricultural chemical(s).

Adjuvants are agents added to an agricultural chemical to increase its pharmacological effect. A wide variety of adjuvants for plant use are known representing diverse and complex chemical types and are available for use in facilitating the action of agricultural chemicals. Classified by mode of action, they include oils, surfactants (such as wetting agents, spreaders, penetrants), stabilizing agents, solvents, hygroscopic agents, deposit builders, foams and antifoam agents, buffering agents, activators, etc. These types of actions are not necessarily mutually exclusive. This great diversity of adjuvants is due largely to varying conditions that adjuvants are applied under as well as the variable results which are obtained depending on the particular agricultural chemical used. One disadvantage of many adjuvants, however, is that they are not biodegradable.

Typical agricultural chemicals include herbicides, plant growth regulators, plant species specific toxins, fungicides, insecticides, including chemical and microbial pesticides, leaf colonizing microorganisms and fertilizers. Because of the varying types of agricultural chemicals available, there is a continuing need to provide plant adjuvants with broad applicability.

It is desirable therefore to provide biodegradable agricultural chemical adjuvants and methods of increasing the pharmacological effect of agricultural chemicals using said plant adjuvants. It is also desirable to provide adjuvants which allow a reduced amount of agricultural chemical to be applied to achieve a pharmacological effect.

EP-A-197622 discloses the use of an esterase in combination with a biocide, to degrade the waxy protective covering of the outer skins of plants and insects.

In an abstract from JP-A-57075906, an enzyme containing solution is applied to the soil around a plant to enhance the effect of antibiotic agents applied to kill fungi or bacteria present on the roots of the plant.

EP-A-184288 discloses the use of enzymes capable of degrading components of a plant as herbicides, fungicides, acaricides or insecticides.

In a first aspect, the present invention provides a method for increasing the pharmacological effect of agricultural chemicals which are normally essentially absorbed by the roots of a plant, which method comprises:

(a) selecting an enzyme which is capable of degrading at least a portion of the plant cell polymer of a plant to which an agricultural chemical is said to have pharmacological effect, wherein said enzyme is selected from, pectinase, hemicellulase, cellulase, and mixtures thereof;

(b) applying the selected enzyme to the plant leaf or other similar structure either prior to or concomitantly with application of the agricultural chemical to the plant.

In a second aspect, of the invention provides a composition or a kit of parts comprising an agricultural chemical and a cell membrane degrading enzyme selected from pectinase, hemicellulase, cellulase, and mixtures thereof.

In a third aspect, the invention provides a composition or a kit of parts comprising an agricultural chemical in which is normally essentially absorbed by the root of a plant and a cell membrane degrading enzyme.

In plants, the outer layers or membranes are polymeric cell structural components which are associated with waterproofing and protection. The outermost layer is normally the biopolyester cutin in the aerial parts and suberin, a poler containing polyester domains, in the underground parts and at wound surfaces. Other membrane layers usually consists of the cell wall which contains polymers such as pectin, cellulose, hemicellulose, protein, etc. Plant cell polymers then are any polymeric layer which constitutes a major protective barrier between the plant and its environment and also functions as a biological barrier so that diffusion of molecules can be controlled. (See Science Vol. 208, 30 May 1980, pages 990-1000.)

It is an advantage of this invention in that the plant depolymerase enzyme selected for use in the invention is biodegradable. Selection of a plant depolymerase enzyme is done in accordance with the particular plant cell polymer to be degraded. So, for example, where the cell polymer is cutin, an appropriate lipase can be included. The depolymerases pectinase, hemicellulase, cellulase, and proteinase may be used alone or in combination with lipase. Cutinases are preferred lipases and available from a variety of sources. See Cutinases from Fungi and Pollen, P.E. Kolattukudy, Pg. 472-504 in Lipases (ed. B. Bergtröm and H. Brockman), Elsevier 1984, incorporated herein by reference, for a discussion of a variety of cutinases useful in the practice of the invention. A preferred lipase is that lipase isolated from Pseudomonas putida ATCC 53552, *described in European Patent application 87310120.8 (EP 268,452A) filed concurrently herewith (priority USSN 932959 of 19 November 1986) and entitled "Novel hydrolase and method of production", the lipase having the amino acid sequence given below. However, as disclosed in said copending application, functional derivatives of that hydrolase may be produced, e.g. from mutant strains derived from P.putida ATCC 53552 or by altering the coding sequence where the hydrolase is produced by expression in a recombinant host.

(* American Type Culture Collection, 12301 Parklawn Drive, Rockville, MD 20852, USA)

```
                                                          1                              10
                                              ala pro leu pro asp thr pro gly ala pro
                                              GCT CCC CTG CCG GAT ACA CCG GGA GCG CCA

                                                         20                              30
     phe pro ala val ala asn phe asp arg ser gly pro tyr thr thr ser ser gln ser glu
     TTT CCG GCT GTC GCC AAT TTC GAC CGC AGT GGC CCC TAC ACC ACC AGC AGC CAG AGC GAG

                                                         40                              50
     gly pro ser cys arg ile tyr arg pro arg asp leu gly gln gly gly val arg his pro
     GGG CCG AGC TGT CGC ATC TAT CGG CCC CGC GAC CTG GGT CAG GGG GGC GTG CGT CAT CCG

                                                         60                              70
     val ile leu trp gly asn gly thr gly ala gly pro ser thr tyr ala gly leu leu ser
     GTG ATT CTC TGG GGC AAT GGC ACC GGT GCC GGG CCG TCC ACC TAT GCC GGC TTG CTA TCG

                                                         80                              90
     his trp ala ser his gly phe val val ala ala ala glu thr ser asn ala gly thr gly
     CAC TGG GCA AGC CAC GGT TTC GTG GTG GCG GCG GCG GAA ACC TCC AAT GCC GGT ACC GGG

                                                        100                             110
     arg glu met leu ala cys leu asp tyr leu val arg glu asn asp thr pro tyr gly thr
     CGG GAA ATG CTC GCC TGC CTG GAC TAT CTG GTA CGT GAG AAC GAC ACC CCC TAC GGC ACC

                                                        120                             130
     tyr ser gly lys leu asn thr gly arg val gly thr ser gly his ser gln gly gly gly
     TAT TCC GGC AAG CTC AAT ACC GGG CGA GTC GGC ACT TCT GGG CAT TCC CAG GGT GGT GGC

                                                        140                             150
     gly ser ile met ala gly gln asp thr arg val arg thr thr ala pro ile gln pro tyr
     GGC TCG ATC ATG GCC GGG CAG GAT ACG AGG GTG CGT ACC ACG GCG CCG ATC CAG CCC TAC

                                                        160                             170
     thr leu gly leu gly his asp ser ala ser gln arg arg gln gln gly pro met phe leu
     ACC CTC GGC CTG GGG CAC GAC AGC GCC TCG CAG CGG CGG CAG CAG GGG CCG ATG TTC CTG

                                                        180                             190
     met ser gly gly gly asp thr ile ala phe pro tyr leu asn ala gln pro val tyr arg
     ATG TCC GGT GGC GGT GAC ACC ATC GCC TTT CCC TAC CTC AAC GCT CAG CCG GTC TAC CGG

                                                        200                             210
     arg ala asn val pro val phe trp gly glu arg arg tyr val ser his phe glu pro val
     CGT GCC AAT GTG CCG GTG TTC TGG GGC GAA CGG CGT TAC GTC AGC CAC TTC GAG CCG GTC

                                                        220                             230
     gly ser gly gly ala tyr arg gly pro ser thr ala trp phe arg phe gln leu met asp
     GGT AGC GGT GGG GCC TAT CGC GGC CCG AGC ACG GCA TGG TTC CGC TTC CAG CTG ATG GAT

                                                        240                             250
     asp gln asp ala arg ala thr phe tyr gly ala gln cys ser leu cys thr ser leu leu
     GAC CAA GAC GCC CGC GCT ACC TTC TAC GGC GCG CAG TGC AGT CTG TGC ACC AGC CTG CTG

                                        258
     trp ser val glu arg arg gly leu
     TGG TCG GTC GAG CGC CGC GGG CTT
```

Further, one could use selective replacement of amino acids to produce lipases or other depolymerase enzymes which are more selective for the particular cutin or other polymer.

Agricultural chemicals for administration to a plant are widely varied, as discussed earlier, in both type and action. The one thing that agricultural chemicals have in common is an increase in action when systemic absorption is increased.

4

EP 0 272 002 B1

The enzyme selected should be in a concentration great enough to degrade at least a portion of the corresponding polymer. This amount will vary from enzyme to enzyme and from plant to plant as well as be affected by conditions such as temperature, humidity, soil, etc. One skilled in the art would be able to select such amounts without undue experimentation, but in general it is preferred that at least about one microgram per $Cm^2$ of plant surface area applied would be desirable to achieve an adjuvant effect. The enzyme may be applied either prior to or concomitantly with the desired agricultural chemical. Enzymes may be mixed with an appropriate diluant (e.g. water) to achieve ease of application, for example, by spraying. So for example, between about 1 mg. and 0.01 mg. of enzyme per ml of water may be mixed and applied at about 374 ℓ/ha (40 gallons/acre) either with or without a desired agricultural chemical. Preferred concentrations are between 0.05 mg and 0.5 mg of depolymerase per ml of solvent. It is a further advantage of this invention that agricultural chemicals that normally need to be applied to the roots or to the soil for uptake (e.g. atrazine) can now be applied to the leaf or other similar structure for effect or additional effect.

The following examples are representative only and not intended to be limiting. One skilled in the art would be able to select appropriate other depolymerase enzymes other than the lipase shown or those described herein based on the disclosures and upon reading of the representative examples given a specific plant and corresponding agricultural chemical.

EXAMPLE 1

UPTAKE OF RADIOLABELED AGRICULTURAL CHEMICALS INTO LEAF DISCS

EXPERIMENTAL PROCEDURE

Leaf discs (1cm diameter) were prepared from 9-13 day old soybean plants, and placed them on a nitrocellulose paper that was presoaked with 100 ug/ml stocptomycin in a petri dish. Radioactive chemicals were dissolved in 100 mM sodium phosphate buffer containing 0.05% Triton X-100. In addition to Triton, ($^{14}$C) uracil solution contained 0.4% ethanol, ($^{14}$C) atrazine contained 10% ethanol ($^{14}$C) indole acetic acid contained 2% ethanol and ($^{14}$C) urea contained 0.2% ethanol. 5 ul of the radioactive chemical solution (9/uci/ml) was applied on the leaf disc and incubated for 5-7 hr at room temperature. After the incubation, leaf discs were rinsed 3 times with 0.025% Triton X-100 solution and transferred into separate scintillation vials. Radioactivity taken up by each leaf disc was determined by a scintillation counter after adding 10 ml of Ecolite scintillation fluid into each vial. Ten leaf discs were used for each data point in all experiments. All radioactive chemicals were obtained from Amersham(U.S.A). The specific activities of the chemicals were as follows:

indolyl (2-$^{14}$C) acetic acid, 319 uci/mg
(ethyl-1-$^{14}$C) atrazine, 116 uci/mg
(methyl $^{14}$C) diuron, 243 uci/mg
($^{14}$C) urea, 1 mci/mg
(2-$^{14}$C) uracil, 474 uci/mg

ENZYMES

Cutinase enzyme same as before.
Macerating enzyme, GC219, is an enzyme mixture sold by Genencor which comprises of cellulase, pectinase and hemicellulase.
Inactive protein control for cutinase was a cutinase mutant with an alanine substitution at position 126 for serine. This yields an inactive enzyme. For GC219, an equivalent amount of bovine serum albumin was used as inactive protein control.

5

UPTAKE OF CHEMICALS INTO PLANT LEAVES

EXAMPLE: Enhancement of Uracil ($^{14}$C) Uptake by Cutinase and Macerating Enzymes (GC219)

| pH | Cutinase ug/ml | GC219 mg/ml | Radioactivity (cpm) | |
|---|---|---|---|---|
| | | | Inactive Protein Control | Active Enzyme |
| 7.0 | 200 | - | 816 ± 214 | 4070 ± 1160 |
| 7.0 | 100 | - | 2180 ± 724 | 8075 ± 1162 |
| 7.0 | 50 | - | 1340 ± 696 | 3470 ± 684 |
| 10 | 200 | - | 481 ± 124 | 869 ± 364 |
| 10 | 100 | | 234 ± 37 | 477 ± 230 |
| 7.0 | - | 15.7 | 1941 ± 315 | 5191 ± 1745 |

\* At pH 7.0 uptake without any addition of protein was 2090 ± 549 and at pH 10 it was 507 ± 162.

CONCLUSIONS:

  1. Active cutinase and macerating enzymes enhance uptake of uracil.
  2. pH 7.0 is better for uracil uptake than pH 10.

PLANT GROWTH REGULATOR

EXAMPLE: Enhancement Indole Acetic Acid (IAA) Uptake by Cutinase and Macerating Enzymes

| pH | Cutinase ug/ml | GC219 mg/ml | Radioactivity (cpm) | |
|---|---|---|---|---|
| | | | Inactive Protein Control | Active Enzyme |
| 7.0 | 100 | - | * 1712 ± 339 | 7091 ± 794 |
| 9.0 | 100 | - | 3250 ± 513 | 4157 ± 2050 |
| 7.0 | 50 | - | 1261 ± 408 | 5619 ± 2254 |
| 7.0 | - | 7.9 | ** 402 ± 197 | 2052 ± 902 |
| 7.0 | 50 | 7.9 | 540 ± 135 | 9116 ± 2383 |

\* For lipase inactive protein control was A126.
\*\* For GC219 inactive protein control was BSA.
\*\*\* Background uptaken of IAA without any addition of protein was 1292 ± 146.

CONCLUSIONS

  1. IAA uptake is increased by treatment with active cutinase and active macerating enzymes.
  2. IAA uptake at pH 7.0 is better than at pH 9.0.
  3. Combination of enzymes is better than individual enzymes alone for the uptake of IAA.

EXAMPLE 2

FUNGICIDE UPTAKE IN SOYBEAN PLANTS

EXPERIMENTAL PROCEDURE

    The difoliate leaflets of 9-13 day old soybean plants were treated with solutions of cutinase (100 ug/ml), Benomyl (1 mg/ml), and GC219 (12.6 mg/ml) alone and benomyl plus enzymes. The solutions were dissolved in 100 mM sodium phosphate, pH 7 containing 0.05% Triton X-100. In addition to Triton X-100, the Benomyl contained 5% Dimethyl formamide. For each experiment 100 ul of solution was applied in 5 ul droplets to each difoliate leaflet. Duplicate plants were treated in this manner. The treated plants were incubated for two hours under normal greenhouse conditions. Identical solutions as those applied to the plants were also incubated for two hours to assure chemical stability under greenhouse conditions. After the incubation, the treated leaves were cut at the petiole and rinsed with a 0.05% Triton X-100 solution. Both difoliates were then ground with a mortar and pestle with 1.5 ml of a 100 mM sodium phosphate, pH 7 buffer. The extract was centrifuged and the supernatant was sterile filtered through a 0.45 um disc. The supernatant was then added to CMA media containing 2% agar to yield a final volume of 10 mls. 5 mls was then poured into a single well in a 6 well culture plate. Serial dilutions were made for each solution to achieve 1:1, 1:2 and 1:4 dilution of the plant extract in the agar.

Once the agar was solidified each well was innoculated with spores of Trichoderma reesei QM6A strain. The plates were incubated at 30°C for 24 hours and the growth of T. reesei was rated.

Materials

Enzymes:

a) Cutinase enzyme same as before.
b) GC219 (macerating enzyme blend) is an enzyme mixture sold by Genencor.

Fungal Strain

T. reesei QM6A - Obtained from ATCC (ATCC 13631)

Fungicide

Benomyl was purchased from Rod McCullen

| Media | | 0.05 mg/ml streptomycin |
|---|---|---|
| CMA Media: | 2% Agar<br>20 gm malt extract<br>20 gm glucose | 1.0 gm bacto-peptone per 1 liter DI $H_2O$ |

Rating:

- no inhibition + + = good inhibition
+ weak inhibition + + + = strong inhibition

## Results of Fungicide uptake into Plant Leaves

| Description | Inhibition of Fungal Growth |
|---|---|
| Control untreated | - |
| Buffer | - |
| Benomyl (1:1 dilution) | - |
| " (1:2 dilution) | - |
| " (1:4 dilution) | - |

## Results of Fungicide uptake into Plant Leaves - cont.

| Description | Inhibition of Fungal Growth |
|---|---|
| Cutinase (1:1 dilution) | - |
| "          (1:2 dilution) | - |
| "          (1:4 dilution) | - |
| Cutinase and Benomyl (1:1 dilution) | +++ |
| "          "          "          (1:2 dilution) | ++ |
| "          "          "          (1:4 dilution) | + |
| GC219 (1:1 dilution) | - |
| "          (1:2 dilution) | - |
| "          (1:4 dilution) | - |
| GC219 and Benomyl (1:1 dilution) | ++ |
| "          "          "          (1:2 dilution) | + |
| "          "          "          (1:4 dilution) | - |

CONCLUSION:

Cutinase and macerating enzymes increased uptake of Benomyl into soybean plants.

EXAMPLE 3

HYVAR UPTAKE BY WHOLE PLANTS: EFFECT OF MACERATING ENZYMES (GC 219)

EXPERIMENTAL PROCEDURE

13-16 day old Beefsteak Tomato seedlings were treated with solutions of Hyvar and GC219. Solutions of Hyvar and GC219 were made up in DI $H_2O$ and 1% ethanol and adjusted with 0.1N HCL to a final pH of 4.0. 10ul of solution was applied to each cotyledon and 15 ul to each secondary pentafoliate leaflet. 10 tomato seedlings were used for each test solutions. Observations were made daily after treatment for 4 days.

Rating:

- = No phytotoxicity
+ = Some phytotoxicity seen in area of treatment.
+ + = Phytotoxicity seen outside area of treatment.

Materials

Enzyme - GC219 is a mixture of enzymes sold by Genencor.
Hyvar XL - formulated herbicide (DUPONT).
Hyvar was diluted 1:200 or 1:400 for each experiment.

| DATA | PHYTOTOXICITY RATING | |
|---|---|---|
| | Day 1 | Day 2 |
| 1. No treatment | - | - |
| 2. Hyvar alone (1:200 dilution) | - | + |
| 3. Hyvar + 6.28 mg/ml GC219 | + | + + |
| | Day 2 | Day 3 |
| 1. Control | - | - |
| 2. Hyvar (1:400 dilution) | - | - |
| 3. Hyvar + 6.28 mg/ml GC219 | + | + + |
| 4. Hyvar + 12.6 mg/ml GC219 | + + | + + |

CONCLUSION

Macerating enzymes (GC219) enhances uptake of Hyvar into tomato plants.

**Claims**

**1.** A method for increasing the pharmacological effect of agricultural chemicals which are normally essentially absorbed by the roots of a plant, the method comprising:
(a) selecting an enzyme which is capable of degrading at least a portion of the plant cell polymer of a plant to which an agricultural chemical is to have pharmacological effect, wherein said enzyme is selected from pectinase, hemicellulase, cellulase, and mixtures thereof; and
(b) applying the selected enzyme to the plant leaf or other similar structure either prior to or concomitantly with application of the agricultural chemical to the plant.

2. A method according to claim 1 wherein the enzyme selected is a mixture of cellulase, hemicellulase and pectinase.

3. A method according to claim 1 or claim 2 wherein the enzyme also includes a lipase.

4. A method according to claim 3 wherein the lipase is a cutinase.

5. A method according to claim 4 wherein the lipase is that produced by Pseudomonas putida ATCC 53552.

6. A method according to any one of the preceding claims which comprises applying the enzyme to the plant leaf directly as part of step (b).

7. A composition or kit of parts comprising an agricultural chemical which is normally essentially absorbed by the roots of a plant, and a cell membrane degrading enzyme selected from pectinase, hemicellulase, cellulase, and mixtures thereof.

8. A composition or kit according to claim 7 wherein the enzyme is a mixture of pectinase, hemicellulase and cellulase.

9. A composition or kit of parts according to claim 8 wherein the enzyme also includes a lipase.

10. A composition or kit of parts according to claim 9 wherein the lipase is a cutinase.

11. A composition or kit of parts according to claim 10 wherein the lipase is that produced by Pseudomonas putida.

**Patentansprüche**

1. Verfahren zur Erhöhung der pharmakologischen Wirkung von landwirtschaftlichen Chemikalien, die normalerweise im wesentlichen von den Wurzeln einer Pflanze absorbiert werden, wobei das Verfahren umfaßt:
   (a) das Auswählen eines Enzyms, das in der Lage ist, zumindest einen Teil des Pflanzenzellen-Polymers einer Pflanze abzubauen, auf die eine landwirtschaftliche Chemikalie pharmakologische Wirkung zeigen muß, worin das Enzym aus Pectinase, Hemizellulase, Zellulase und Gemischen davon ausgewählt wird; und
   (b) das Aufbringen des ausgewählten Enzyms auf das Pflanzenblatt oder eine ähnliche Struktur, entweder vor oder gemeinsam mit dem Aufbringen der landwirtschaftlichen Chemikalie auf die Pflanze.

2. Verfahren nach Anspruch 1, worin das ausgewählte Enzym ein Gemisch aus Zellulase, Hemizellulase und Pectinase ist.

3. Verfahren nach Anspruch 1 oder 2, worin das Enzym auch eine Lipase umfaßt.

4. Verfahren nach Anspruch 3, worin die Lipase eine Cutinase ist.

5. Verfahren nach Anspruch 4, worin die Lipase jene von Pseudomonas putida ATCC 53.552 produzierte ist.

6. Verfahren nach irgendeinem der vorangegangenen Ansprüche, das das Aufbringen des Enzyms direkt auf das Pflanzenblatt als Teil von Schritt (b) umfaßt.

7. Zusammensetzung oder aus Teilen bestehendes Set, umfassend eine landwirtschaftliche Chemikalie, die normalerweise im wesentlichen von den Wurzeln einer Pflanze absorbiert wird, und ein zellmembran-abbauendes Enzym, das aus Pectinase, Hemizellulase, Zellulase und Gemischen davon ausgewählt ist.

8. Zusammensetzung oder Set nach Anspruch 7, worin das Enzym ein Gemisch aus Pectinase, Hemizellulase und Zellulase ist.

9. Zusammensetzung oder aus Teilen bestehendes Set nach Anspruch 8, worin das Enzym auch eine Lipase umfaßt.

10. Zusammensetzung oder aus Teilen bestehendes Set nach Anspruch 9, worin die Lipase eine Cutinase ist.

11. Zusammensetzung oder aus Teilen bestehendes Set nach Anspruch 10, worin die Lipase jene von Pseudomonas putida produzierte ist.

**Revendications**

1. Méthode pour accroître l'effet pharmacologique de produits chimiques agricoles qui sont normalement essentiellement absorbés par les racines d'une plante, la méthode comprenant :
   (a) la sélection d'une enzyme qui est capable de dégrader au moins une portion du polymère de cellule végétale d'une plante sur laquelle un produit chimique agricole est sensé avoir un effet pharmacologique, dans laquelle ladite enzyme est sélectionnée parmi la pectinase, l'hémicellulase, la cellulase et leurs mélanges ; et
   (b) l'application de l'enzyme sélectionnée à la feuille de la plante ou à d'autres structures similaires soit avant soit en même temps que l'application du produit chimique agricole à la plante.

2. Méthode selon la revendication 1 dans laquelle l'enzyme sélectionnée est un mélange de cellulase, hémicellulase et pectinase.

3. Méthode selon la revendication 1 ou la revendication 2 dans laquelle l'enzyme inclut également une lipase.

4. Méthode selon la revendication 3 dans laquelle la lipase est une cutinase.

5. Méthode selon la revendication 4 dans laquelle la lipase est celle produite par Pseudomonas putida ATCC 53552.

6. Méthode selon l'une quelconque des revendications précédentes qui comprend l'application de l'enzyme à la feuille de la plante directement comme partie de l'étape (b).

7. Composition ou kit d'éléments comprenant un produit chimique agricole qui est normalement essentiellement absorbé par les racines d'une plante, et une enzyme dégradant la membrane cellulaire, sélectionnée parmi la pectinase, l'hémicellulase, la cellulase et leurs mélanges.

8. Composition ou kit selon la revendication 7 dans lesquels l'enzyme est un mélange de pectinase, hémicellulase et cellulase.

9. Composition ou kit d'éléments selon la revendication 8 dans lesquels l'enzyme inclut également une lipase.

10. Composition ou kit d'éléments selon la revendication 9 dans lesquels la lipase est une cutinase.

11. Composition ou kit d'éléments selon la revendication 10 dans lesquels la lipase est celle produite par Pseudomonas putida.